(19) **Europäisches Patentamt European Patent Office Office européen des brevets**

(11) **EP 1 335 480 B1**

(12) **FASCICULE DE BREVET EUROPEEN**

(45) Date de publication et mention
de la délivrance du brevet:
**04.04.2012 Bulletin 2012/14**

(51) Int Cl.:
**H02K 15/02** *(2006.01)*

(21) Numéro de dépôt: **03290315.5**

(22) Date de dépôt: **07.02.2003**

(54) **Procédé et machine pour la fabrication d'un circuit magnétique de machine électrique**

Verfahren und Vorrichtung zur Herstellung eines magnetischen Kreises einer elektrischen Maschine

Method and device for producing a magnetic circuit for an electric motor

(84) Etats contractants désignés:
**AT BE BG CH CY CZ DE DK EE ES FI FR GB GR HU IE IT LI LU MC NL PT SE SI SK TR**

(30) Priorité: **11.02.2002 FR 0201647**

(43) Date de publication de la demande:
**13.08.2003 Bulletin 2003/33**

(73) Titulaire: **MOTEURS LEROY-SOMER**
**16000 Angoulême (FR)**

(72) Inventeur: **Vohlgemuth, Patrick**
**16110 La Rochefoucauld (FR)**

(74) Mandataire: **Tanty, François**
**Cabinet Nony**
**3, rue de Penthièvre**
**75008 Paris (FR)**

(56) Documents cités:
**EP-A- 1 120 882      DE-A- 2 053 823**
**FR-A- 2 171 398      US-A- 3 854 355**
**US-A- 3 890 863**

• **PATENT ABSTRACTS OF JAPAN vol. 009, no. 047 (E-299), 27 février 1985 (1985-02-27) & JP 59 188356 A (HITACHI SEISAKUSHO KK), 25 octobre 1984 (1984-10-25)**

## Description

La présente invention concerne un procédé et une machine pour la fabrication d'un circuit magnétique de machine électrique.

Il est connu de réaliser le circuit magnétique des machines électriques par empilage de tôles magnétiques. Pour les machines électriques relativement puissantes, le découpage des tôles nécessite une presse importante, étant donné la taille de chacune d'elle.

Il existe donc un besoin pour diminuer le coût de la fabrication d'un circuit magnétique de machine électrique, notamment en permettant d'utiliser une presse plus petite et en diminuant le temps de fabrication.

On connaît par la demande de brevet européen EP-A2-1 120 882 un procédé de fabrication d'un circuit magnétique de machine électrique, consistant à réaliser une bande de secteurs de tôle puis à enrouler cette bande sur un mandrin.

L'invention a pour objet, selon un de ses aspects, un procédé de fabrication d'un circuit magnétique de machine électrique, dans lequel :

- on forme par découpage à un poste de découpe au moins une bande de secteurs reliés entre eux par des liaisons déformables, et
- on enroule la bande de secteurs autour d'un mandrin, à un poste d'enroulement,

ce procédé pouvant se caractériser par le fait qu'entre les postes de découpe et d'enroulement on dispose une zone configurée pour permettre à la bande de se déformer de manière à compenser une différence de vitesse entre la vitesse de la bande à la sortie du poste de découpe et celle à l'entrée du poste d'enroulement.

Grâce à l'invention, on peut réaliser en continu le circuit magnétique de la machine électrique, par découpage et enroulement d'une bande de tôle.

Le procédé selon l'invention permet la réalisation d'un stator, ou d'un rotor, ou d'un circuit magnétique pour une machine électrique statique tel qu'un transformateur par exemple.

L'invention permet également d'utiliser un matériau différent pour le stator et pour le rotor, par exemple une tôle à forte perméabilité relativement coûteuse pour le stator et une tôle de moindre coût pour le rotor, grâce au fait que les pertes matière sont réduites.

Selon un autre aspect de l'invention, on maintient au moins une portion de la bande de secteurs en tension dans la zone précitée au moyen d'au moins un élément tenseur. Cette zone comporte avantageusement une pluralité de rouleaux entraînés en rotation autrement que par le défilement de la bande, par exemple des rouleaux entraînés en rotation par un moteur. Les rouleaux sont avantageusement entraînés à une vitesse plus grande que celle de défilement de la bande, de manière à soumettre celle-ci à une certaine tension, par friction.

Les rouleaux qui peuvent être placés transversalement par rapport à la direction d'avancement de la bande peuvent tourner autour d'axes ayant une inclinaison croissante, par rapport à un axe de référence sensiblement perpendiculaire à la direction d'avancement de la bande à la sortie du poste de découpe.

Les rouleaux peuvent être entraînés en rotation à une vitesse qui va croissante au fur et à mesure que l'on se rapproche du poste d'enroulement.

La zone précitée peut être configurée de telle sorte que le trajet de la bande de secteurs dans celle-ci soit sensiblement horizontal. La zone peut notamment être configurée de telle sorte que la bande de secteurs suive dans celle-ci un trajet curviligne.

La bande peut suivre par exemple un trajet curviligne d'autant plus long que la vitesse de la bande à la sortie du poste de découpe est élevée.

Dans une mise en oeuvre particulière de l'invention, on détecte la position de la bande dans la zone et l'on modifie au moins la vitesse de la bande à l'entrée du poste d'enroulement et/ou à la sortie du poste de découpe en fonction de la position détectée.

On peut détecter la présence éventuelle de la bande en deux points au moins de la zone et modifier la vitesse de la bande, à l'entrée du poste d'enroulement et/ou à la sortie du poste de découpe, de telle sorte que la bande défile entre lesdits points. On peut par exemple utiliser un ensemble de deux capteurs inductifs et asservir la vitesse d'entraînement en rotation du mandrin à la vitesse de découpe et à la position de la bande qui est détectée.

Dans une mise en oeuvre particulière de l'invention, on entraîne en rotation le mandrin pour permettre l'enroulement de la bande autour de celui-ci.

On peut déplacer le mandrin verticalement au fur et à mesure de l'empilement, en l'abaissant par exemple de telle sorte que l'arrivée des secteurs sur le mandrin se fasse toujours sensiblement à la même hauteur.

Dans une mise en oeuvre particulière de l'invention, on découpe les secteurs au moyen d'une presse fonctionnant à une cadence de plus de 100 coups par minute, par exemple de plus de 150 coups par minute.

On peut utiliser pour découper les secteurs une presse exerçant une poussée de moins de 500 tonnes, par exemple de moins de 200 tonnes, et par exemple encore de 125 tonnes environ. Une telle presse peut fonctionner à une cadence relativement élevée.

Dans une mise en oeuvre particulière, on découpe les secteurs en utilisant un lubrifiant et on élimine celui-ci lors d'une étape de séchage avant l'arrivée de la bande dans la zone précitée. Cette élimination peut se faire par exemple dans un séchoir situé à la sortie de la presse.

Selon un aspect de l'invention, on peut plaquer les secteurs sur la portion de la bande déjà enroulée sur le mandrin au moyen de galets.

On peut découper les secteurs de telle sorte que les liaisons déformables reliant les secteurs soient situées à la périphérie extérieure de l'enroulement de la bande sur le mandrin et l'on peut plaquer radialement les secteurs contre le mandrin au moyen d'au moins un galet cranté dont les crans sont configurés de manière à pouvoir s'engager sur les liaisons déformables reliant les secteurs.

La présence des liaisons déformables à l'extérieur des secteurs permet d'améliorer le contact entre les secteurs, car les parties des liaisons qui s'étendent hors du plan des secteurs ne gênent pas l'empilage. Une bande de secteurs de tôle pour 1a fabrication d'un circuit magnétique de machine électrique comportant de telles liaisons est décrite dans la demande de brevet européen EP-A2-1 120 882.

Dans une mise en oeuvre particulière de l'invention, les secteurs comportant chacun au moins une dent, on engage périodiquement, au cours de l'enroulement de la bande de secteurs sur le mandrin, au moins un linguet dans des encoches des secteurs, de manière à aligner les dents qui se superposent dans une direction parallèle à l'axe d'enroulement, ce linguet étant apte à se déplacer entre une position saillante dans laquelle il peut coopérer avec la bande de secteurs et une position rétractée, dans laquelle il ne gêne pas la mise en place des secteurs sur le mandrin.

L'extrémité de chaque linguet peut être configurée de manière à coopérer avec des encoches formées par deux dents adjacentes des secteurs.

Chaque linguet peut être solidaire d'au moins un galet apte à se déplacer dans au moins un chemin de came ayant une forme commandant le déplacement du linguet entre lesdites positions saillante et rétractée, en fonction de la rotation du mandrin.

Chaque linguet est notamment solidaire d'un galet à chacune de ses extrémités haute et basse.

Dans une mise en oeuvre particulière de l'invention, la forme de chaque chemin de came permet de disposer tous les linguets dans la même position, saillante ou rétractée, pour une position angulaire prédéterminée du mandrin.

Chaque chemin de came peut ainsi être configuré de telle sorte que tous les linguets passent de la position saillante à la position rétractée ou réciproquement, pour une rotation du mandrin de 1/2n tour, le nombre de linguets étant égal à n, n étant par exemple égal à 8.

Le procédé peut comporter encore les étapes suivantes :

- placer tous les linguets en position saillante,
- presser axialement la portion de bande enroulée autour du mandrin au moyen d'un plateau presseur, notamment de façon à immobiliser les différentes couches de l'empilement par soudage.

Dans une mise en oeuvre particulière de l'invention, on peut souder à un poste de soudage au moins une barre disposée parallèlement à l'axe d'enroulement, sur l'enroulement en place sur le mandrin. Cette barre peut être constituée par un profilé en forme de U et comporter deux ailes qui viennent se positionner de part et d'autre d'une ou plusieurs rangées de liaisons déformables reliant les secteurs. Cette barre contribue au maintien de l'empilement une fois celui-ci retiré du mandrin. On peut utiliser huit barres, par exemple. La longueur d'une barre est au moins égale à la longueur de l'empilage, par exemple comprise entre 300 et 700 mm, et par exemple est voisine de 500 mm environ.

Le poste de soudage peut être indépendant du poste d'enroulement.

On peut transférer le mandrin du poste d'enroulement au poste de soudage au moyen d'un bras rotatif. On peut aussi réaliser ce transfert manuellement.

Le poste de soudage peut comporter une ou plusieurs torches de soudage aptes à être déplacées parallèlement à l'axe de l'empilement, notamment verticalement.

Dans une mise en oeuvre particulière de l'invention, le procédé peut comporter en outre les étapes suivantes :

- placer tous les linguets en position rétractée dans le mandrin,
- extraire l'enroulement du mandrin.

L'invention a encore pour objet, selon un autre de ses aspects, une machine pour la fabrication d'un circuit magnétique de machine électrique, pour la mise en oeuvre du procédé précité, comportant un mandrin sur lequel peut être enroulée une bande de secteurs, ce mandrin comprenant au moins un linguet, apte à se déplacer au cours de l'enroulement de la bande de secteurs, entre une position saillante dans laquelle chaque linguet peut coopérer avec la bande de secteurs et une position rétractée dans laquelle il ne gène pas la mise en place des secteurs sur le mandrin.

Le mandrin peut tourner autour d'un noyau fixe, ce noyau comportant au moins un chemin de came, et les linguets peuvent être solidaires chacun d'au moins un organe engagé dans chaque chemin de sorte qu'ils se déplacent entre lesdites positions saillante et rétractée en fonction de la rotation du mandrin.

La machine comporte par exemple un nombre de linguets au moins égal au nombre de secteurs par tour, notamment huit linguets. Le diamètre extérieur du mandrin est par exemple compris entre 200 et 400 mm, étant par exemple supérieur ou égal à 300 mm environ.

Le mandrin peut être monté sur un élévateur, notamment un dispositif motorisé ou un dispositif à vérin (s) de sorte qu'il soit apte à être déplacé axialement de manière à maintenir la face supérieure de l'enroulement sensiblement à la même hauteur pendant toute la durée de l'empilage des secteurs.

Le mandrin peut être interchangeable.

La machine peut comporter un carrousel comportant plusieurs mandrins, par exemple de dimensions différentes.

La machine peut comporter un convoyeur configuré pour permettre d'alimenter le mandrin avec une bande de secteurs issue d'un poste de découpe tout en permettant à la bande de se déformer de manière à compenser une différence de vitesse entre la vitesse de la bande à la sortie du poste de découpe et celle à l'entrée du poste d'enroulement.

Un tel convoyeur peut comporter deux parois comportant chacune au moins une portion curviligne, entre lesquelles la bande peut être apte à défiler. Ces deux parois peuvent avoir un écartement qui augmente puis diminue, lorsqu'on va du poste de découpe au poste d'enroulement.

Le convoyeur peut comporter des rouleaux aptes à être entraînés en rotation et s'étendant au-delà d'au moins l'une des parois, par exemple, afin de coopérer avec un mécanisme d'entraînement.

Le convoyeur peut être suffisamment large pour permettre le défilement entre ses parois de différents types de bandes de secteurs, par exemple de dimensions et/ou de forme différentes.

La machine peut comporter un galet cranté monté sur un bras escamotable, ce galet étant destiné à être entraîné en rotation lors de l'enroulement de la bande en raison de l'engagement des crans sur les liaisons déformables reliant les secteurs.

Les caractéristiques et avantages de la présente invention ressortiront à la lecture de la description détaillée qui va suivre, d'exemples de réalisations non limitatifs de l'invention, et à l'examen du dessin annexé, sur lequel :

- la figure 1 est une vue schématique de dessus illustrant l'enroulement d'une bande de secteurs,
- la figure 2 est une vue schématique et partielle, de dessus, d'une machine permettant de fabriquer un circuit magnétique,
- la figure 3 est une vue schématique et partielle, en perspective, d'un détail de la machine de la figure 2,
- la figure 4 est une vue schématique et partielle, de dessus, du mandrin de la machine de la figure 2,
- la figure 5 représente de manière schématique et partielle un circuit magnétique,
- la figure 6 est une vue schématique et partielle, de dessus, d'un autre exemple de machine, et
- la figure 7 est une vue schématique et partielle, de dessus, d'un autre exemple de machine.

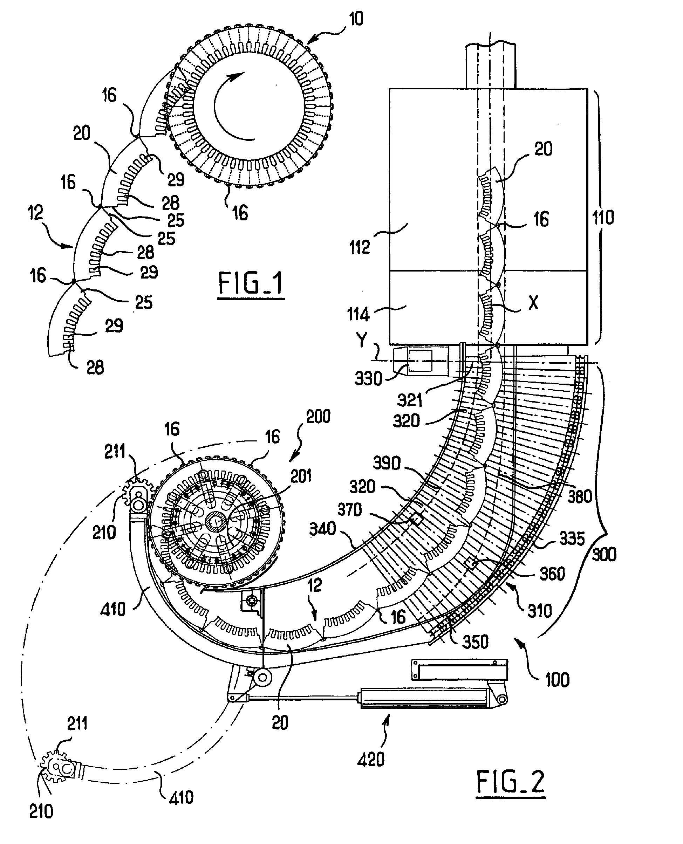

On a représenté sur la figure 1 une partie 10 d'un circuit magnétique de stator de machine électrique tournante, formé par l'enroulement d'une bande 12 de secteurs 20 de tôle sur un mandrin non représenté, entraîné en rotation autour d'un axe perpendiculaire au plan de la figure.

Les secteurs 20 sont reliés entre eux par des liaisons déformables 16 réalisées par découpe d'un seul tenant avec les secteurs 20. Le pont de matière constituant ces liaisons déformables 16 peut prendre différentes formes et par exemple comporter une portion médiane de largeur constante. Il peut en outre comporter de part et d'autre de la portion médiane deux rétrécissements destinés à créer des zones de déformation préférentielle, ou encore comporter une portion médiane délimitée radialement par deux bords circulaires concentriques. On pourra se reporter à la demande EP-A2-1 120 882, pour une description plus détaillée d'exemples de liaisons déformables pouvant être réalisées entres les secteurs.

Les liaisons 16 peuvent, comme dans l'exemple illustré sur la figure 1, faire saillie à l'extérieur des secteurs, c'est-à-dire qu'elles s'étendent en dehors du diamètre extérieur des secteurs empilés.

Les secteurs 20 comportent en outre des dents 28, séparées par des encoches 29 destinées à recevoir les fils conducteurs des enroulements du stator, de manière conventionnelle.

Dans l'exemple illustré à la figure 1, la séparation entre deux secteurs se fait au milieu d'une encoche 29, mais on ne sort pas du cadre de l'invention lorsque la séparation entre secteurs est située ailleurs qu'au milieu d'une encoche, par exemple sur une dent 28.

On peut comprendre à l'examen de la figure 1 que les liaisons 16 entre les secteurs 20 ne se superposent pas d'une couche de secteurs à la suivante. On évite ainsi que les liaisons de deux couches adjacentes de secteurs ne viennent au contact les unes des autres et ne gênent l'empilement des secteurs.

Les bords 25 des secteurs sont rendus jointifs lors de l'opération d'enroulement sur le mandrin.

On va maintenant décrire, en référence à la figure 2, une machine 100 permettant de réaliser un circuit magnétique par enroulement d'une bande de secteurs telle que celle décrite en référence à la figure 1.

La machine 100 comporte un poste de découpage et de séchage 110 permettant de former à partir d'une bobine de tôle par découpe au moins une bande de secteurs reliés entre eux par des liaisons déformables, et un poste d'enroulement 200 comportant un mandrin 201.

Le poste 110 comporte une presse 112 permettant le découpage des secteurs dans la bande de tôle et un séchoir 114 permettant l'élimination d'un lubrifiant utilisé pendant le découpage des secteurs.

La presse 112 fonctionne dans l'exemple considéré à une cadence supérieure à 100 coups/minute, par exemple de 160 coups/minute environ.

Dans l'exemple décrit, la presse 112 découpe un seul secteur 20 à la fois, mais on ne sort pas du cadre de la présente invention en utilisant une presse apte à découper plusieurs secteurs à la fois.

La vitesse de la bande à la sortie du poste 110 est discontinue, et la bande 12 avance par à-coups à sa sortie du poste 110.

La machine 100 comporte une zone 300 configurée pour permettre à la bande 12 de se déformer de manière à compenser une différence de vitesse entre la vitesse de la bande à la sortie du poste 110 et celle à l'entrée du poste d'enroulement 200.

La zone 300 comporte un convoyeur 310 comportant des rouleaux 320 entraînés en rotation par un moteur 330 par l'intermédiaire de moyens d'entraînement 335.

Ces rouleaux 320 sont légèrement coniques, tournent autour d'axes horizontaux respectifs ayant une inclinaison croissante, par rapport à un axe Y de référence, cet axe Y étant sensiblement perpendiculaire à la direction X d'avancement de la bande 12 à la sortie du poste 110.

Les rouleaux 320 sont disposés sensiblement transversalement par rapport à la direction d'avancement de la bande 12 et sont entraînés, du côté de leur plus grand diamètre, en rotation par le moteur 330, à une vitesse croissante quand on s'éloigne du poste 110.

La bande 12 est posée librement sur les rouleaux 320 et défile sensiblement horizontalement en direction du mandrin 201. L'entraînement des rouleaux à une vitesse supérieure à la vitesse moyenne de sortie de la presse, et, dans l'exemple décrit, à des vitesses croissantes, permet de maintenir une tension dans la bande 12 au cours de son trajet dans la zone 300, par friction entre les rouleaux 320 et les secteurs 20.

Le convoyeur 310 présente une forme générale curviligne, et comporte deux parois 340 et 350, verticales dans l'exemple décrit, comportant chacune au moins une portion curviligne. Ces deux parois 340 et 350 ont un écartement qui augmente à partir de la sortie du poste 110, qui est maximum sensiblement à mi-chemin entre le poste 110 et le poste 200, puis qui diminue lorsqu'on se rapproche du poste 200.

Lorsque la vitesse à la sortie du poste 110 est plus faible que celle à l'entrée du poste d'enroulement 200, la bande 12 défile dans le convoyeur 310 en se rapprochant de la paroi 340. A l'inverse, lorsque la vitesse de la bande 12 à la sortie du poste 110 est plus élevée que celle à l'entrée du poste d'enroulement, la bande 12 défile dans le convoyeur 310 en se rapprochant de la paroi 350. Les liaisons 16 permettent à la bande 12 de se déformer et de se déplacer entre les parois 340 et 350.

La zone 300 comporte, dans l'exemple illustré, des détecteurs 360 et 370 permettant de détecter la position de la bande entre les parois 340 et 350.

Ces détecteurs 360 et 370 sont par exemple des capteurs inductifs qui détectent la présence de la bande à leur niveau, ce qui est le cas lorsque celle-ci suit des trajets curvilignes 380 et 390 respectifs.

Lorsque la bande 12 atteint l'un des détecteurs 360 et 370, un dispositif d'asservissement non représenté modifie la vitesse d'enroulement sur le mandrin 201. Ainsi, lorsque la bande atteint le détecteur 360, la vitesse d'enroulement sur le mandrin 201 est accélérée. De façon analogue, lorsque la bande 12 atteint le détecteur 370, l'enroulement autour du mandrin est ralenti.

On peut également utiliser pour déterminer la position de la bande dans la zone 300, en variante ou additionnellement, des capteurs optiques ou tout autre type de capteur adapté.

La bande 12 qui quitte la zone 300 s'enroule autour du mandrin 201. La bande est plaquée contre le mandrin 201 par un galet cranté 210 comportant des crans 211 qui viennent coopérer avec les empilements de liaisons 16 reliant les secteurs 20 de la bande 12. Le galet 210 est ainsi entraîné en rotation lors de l'enroulement de la bande.

Le galet 210 est fixé sur un bras rotatif 410 capable de s'écarter du mandrin 201 sous l'action d'un vérin 420, afin de prendre la position représentée en traits interrompus sur la figure 2. Le galet 210 est éloigné du mandrin une fois l'empilement achevé, afin de permettre l'extraction de l'empilement du mandrin.

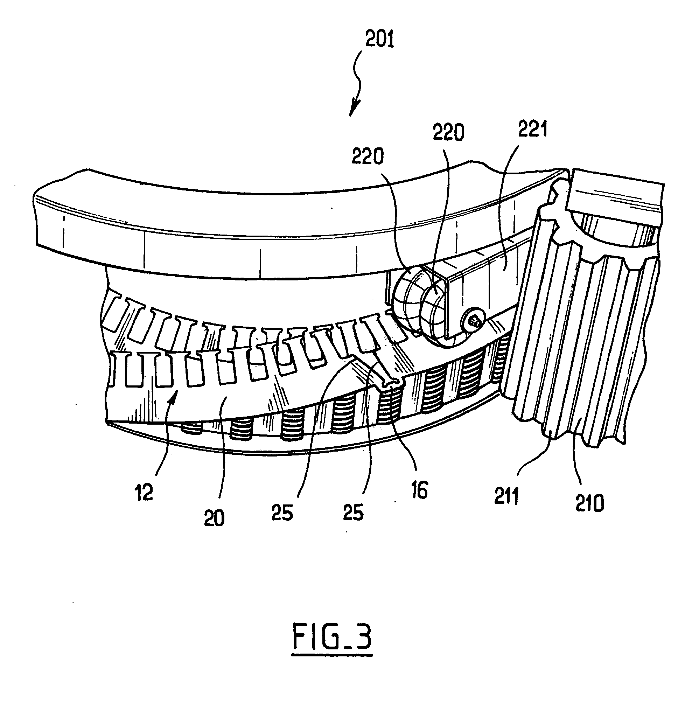

La bande 12 de secteurs 20 est plaquée sur la portion de bande déjà enroulée au moyen d'un ensemble de galets rotatifs 220, comme illustré à la figure 3.

Le mandrin 201 est abaissé au fur et à mesure de l'enroulement de la bande par un dispositif motorisé situé à sa base ou un dispositif à vérins non représenté sur la figure 2, de sorte que la couche supérieure de l'empilement se situe pendant toute la durée de l'empilage sensiblement à la même hauteur.

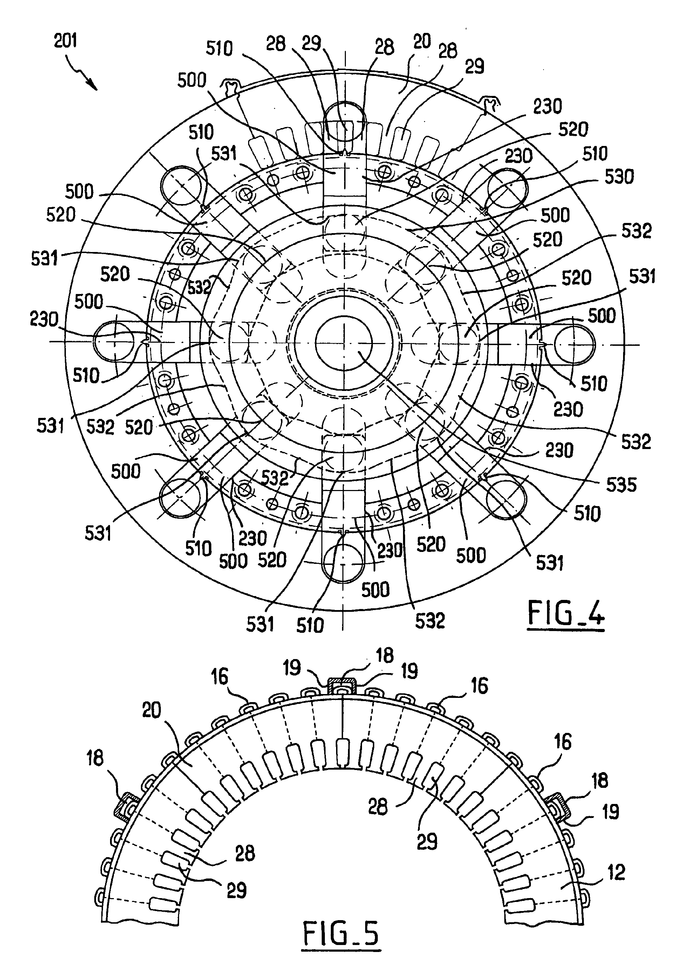

Les dents 28 des secteurs 20 de la bande 12 sont positionnées sur le mandrin 201 au moyen de linguets 500, comme illustré à la figure 4. Ces linguets, qui sont au nombre de huit dans l'exemple illustré, n'ont pas été représentés à la figure 3 dans un souci de clarté du dessin.

Les linguets 500 sont aptes à, chacun, coulisser dans un logement correspondant 230 du mandrin 201.

Les linguets 500 comportent chacun une extrémité 510 qui s'étend sur sensiblement toute la longueur du mandrin et qui est apte à venir coopérer avec les extrémités de deux dents 28 situées de part et d'autre d'une encoche 29 d'un secteur 20, pour aligner ces dents avec celles des couches déjà empilées, selon une direction parallèle à l'axe de l'enroulement.

Dans chacune de leurs extrémités hautes et basses, les linguets 500 sont solidaires chacun d'un galet 520 apte à se déplacer chacun dans un chemin de came 530, réalisé dans une partie centrale 535 fixe par rapport à la partie périphérique du mandrin 201, rotative. Chaque chemin de came 530 a une forme permettant aux linguets de se déplacer entre une position saillante, dans laquelle l'extrémité 510 vient coopérer avec les dents 28 dans les encoches 29, et une position au moins partiellement rétractée dans le mandrin 201, qui ne gêne pas l'accostage des secteurs 20 avec le mandrin 201.

Chaque linguet 500 est dans une position saillante lorsque les galets 520 correspondants se trouvent dans une portion 531 des chemins de came 530, comme on peut le voir sur la figure 4.

Chaque linguet 500 est dans une position rétractée, non représentée, lorsque les galets 520 correspondants se trouvent dans une portion 532 des chemins de came 530, qui est plus proche du centre de rotation du mandrin 201 que la portion 531.

Les portions 531 et 532 sont régulièrement alternées, et il y a autant de couples de portions 531 et 532 que de linguets 500. Tous les linguets 500 peuvent se trouver en même temps dans la même position, soit saillante, soit rétractée, et l'on passe d'une position à l'autre en faisant effectuer au mandrin une rotation de

$\dfrac{1}{2n}$ tours, où l'n désigne le nombre de linguets.

Une fois l'enroulement achevé, on obtient un circuit magnétique comportant sur sa circonférence extérieure des empilements verticaux de liaisons 16, comme illustré à la figure 5. Pour maintenir l'empilement, on soude des barres 18 ayant une section en forme de U, comportant deux ailes 19 qui sont positionnées dans l'exemple décrit de chaque côté d'une rangée verticale de liaisons 16.

Dans l'exemple illustré à la figure 5, chaque barre 18 recouvre une seule rangée de liaisons 16, mais on ne sort pas du cadre de la présente invention lorsque les barres 18 sont plus larges et recouvrent chacune plusieurs rangées verticales de liaisons 16.

Les barres 18 peuvent être fixées sur l'empilement à un poste de soudage qui peut être distinct du poste d'enroulement.

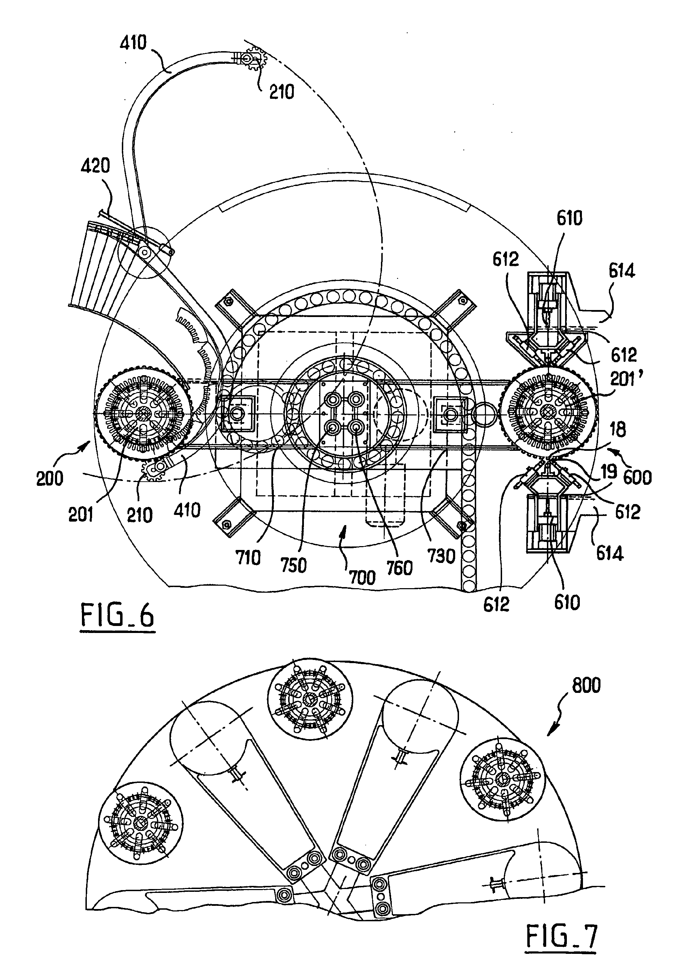

On a représenté à la figure 6 un poste de soudage 600 indépendant du poste d'enroulement.

Le mandrin 201 est supporté par un bras 710 rotatif. Un deuxième mandrin 201' est fixé à un bras rotatif 730 diamétralement à l'opposé du bras 710. Les deux bras 710 et 730 se raccordent à un moyeu 700 pouvant être entraîné en rotation autour d'un axe vertical, et pouvant être déplacé verticalement par des vérins ou par un dispositif motorisé 750 au cours de l'enroulement d'une bande de secteurs sur un mandrin 201 ou 201'.

Lorsque l'enroulement autour du mandrin 201 est achevé, l'enroulement est pressé au moyen d'un plateau presseur non représenté puis le moyeu 700 tourne de 180° autour de son axe de façon à amener le mandrin 201 à l'emplacement du mandrin 201' au poste de soudage 600.

Les barres 18 sont alors placées sur les liaisons 16, comme illustré à la figure 5, et soudées au moyen de deux dispositifs de soudage 610, comportant chacun deux torches de soudage 612 placées à 90° l'une par rapport à l'autre, et permettant de souder chacune l'une des ailes 19 d'une barre 18 sur l'empilement.

Le mandrin placé au poste de soudage est apte à être entraîné en rotation par un dispositif non représenté, pour permettre le soudage de plusieurs barres 18, successivement.

Le mandrin 201' est déplacé axialement lors du soudage des barres 18 par les vérins ou par le même dispositif motorisé 750 qui permet de maintenir le niveau de dépose à hauteur constante. Le soudage sur l'un des mandrins 201 ou 201' peut avoir lieu sensiblement en même temps que l'enroulement d'une bande de secteurs sur l'autre mandrin.

Les dispositifs de soudage 610 sont chacun supportés par un bras escamotable 614 rotatif, permettant de les écarter du mandrin 201' afin d'extraire l'empilement lorsque le soudage a été entièrement effectué.

Le transfert du mandrin du poste d'enroulement au poste de soudage peut également être effectué manuellement, sans qu'on sorte du cadre de la présente invention.

On ne sort pas non plus du cadre de la présente invention lorsque la machine comporte un carrousel 800 supportant plusieurs mandrins, éventuellement de tailles et de formes différentes, ce carrousel étant partiellement représenté à la figure 7.

**Revendications**

1. Procédé de fabrication d'un circuit magnétique de machine électrique, dans lequel :

   - on forme par découpage à un poste de découpe (112) au moins une bande (12) de secteurs (20) reliés entre eux par des liaisons déformables (16), et
   - on enroule la bande de secteurs autour d'un mandrin (201), à un poste d'enroulement (200),

   procédé **caractérisé par le fait qu'**entre les postes de découpe et d'enroulement on dispose une zone (300) configurée pour permettre à la bande de se déformer de manière à compenser une différence de vitesse entre la vitesse de la bande à la sortie du poste de découpe et celle à l'entrée du poste d'enroulement.

2. Procédé selon la revendication précédente, **caractérisé par le fait qu'**on maintient au moins une portion de la bande de secteurs en tension dans ladite zone (300) au moyen d'au moins un élément tenseur (320).

3. Procédé selon la revendication 2, **caractérisé par le fait que** ladite zone comporte une pluralité de rouleaux (320) entraînés en rotation autrement que par le défilement de la bande.

4. Procédé selon la revendication précédente, **caractérisé par le fait que** lesdits rouleaux tournent autour d'axes ayant une inclinaison croissante, par rapport à un axe de référence (Y) sensiblement perpendiculaire à la direction d'avancement de la bande à la sortie du poste de découpe.

5. Procédé selon l'une quelconque des revendications précédentes, **caractérisé par le fait que** ladite zone (300) est configurée de telle sorte que le trajet de la bande de secteurs dans celle-ci soit sensiblement horizontal.

6. Procédé selon l'une quelconque des revendications précédentes, **caractérisé par le fait que** ladite zone (300) est configurée de telle sorte que la bande de secteurs suive dans celle-ci un trajet curviligne.

7. Procédé selon l'une quelconque des revendications précédentes, **caractérisé par le fait qu'**on détecte la position de la bande dans ladite zone et qu'on modifie au moins la vitesse de la bande à la sortie du poste de découpe et/ou à l'entrée du poste d'enroulement en fonction de la position détectée.

8. Procédé selon la revendication précédente, **caractérisé par le fait que** l'on détecte la présence éventuelle de la bande en deux points au moins de ladite zone, et **par le fait que** l'on modifie la vitesse de la bande à l'entrée du poste d'enroulement et/ou à la sortie du poste de découpe de telle sorte que la bande défile entre lesdits points.

9. Procédé selon la revendication précédente, **caractérisé par le fait que** l'on entraîne en rotation le mandrin (201) pour permettre l'enroulement de la bande autour de celui-ci.

10. Procédé selon l'une quelconque des revendications précédentes, **caractérisé par le fait qu'**on déplace le mandrin verticalement au fur et à mesure de l'empilement.

11. Procédé selon l'une quelconque des revendications précédentes, **caractérisé par le fait que** l'on découpe les secteurs au moyen d'une presse fonctionnant à une cadence de plus de 100 coups par minute, notamment de plus de 150 coups par minute.

12. Procédé selon la revendication précédente, **caractérisé par le fait que** ladite presse exerce une poussée de moins de 500 tonnes, et notamment de 125 tonnes environ.

13. Procédé selon l'une quelconque des revendications précédentes, **caractérisé par le fait que** l'on découpe les secteurs en utilisant un lubrifiant et qu'on élimine celui-ci par séchage avant l'arrivée de la bande dans ladite zone.

14. Procédé selon l'une quelconque des revendications précédentes, **caractérisé par le fait qu'**on plaque les secteurs sur une portion de bande déjà enroulée sur le mandrin au moyen de galets (220).

15. Procédé selon l'une quelconque des revendications précédentes, **caractérisé par le fait que** l'on découpe les secteurs de telle sorte que les liaisons déformables reliant les secteurs soient situées à la périphérie extérieure de l'enroulement et **par le fait que** l'on plaque radialement les secteurs contre le mandrin au moyen d'un galet cranté (210) dont les crans (211) sont configurés de manière à pouvoir s'engager sur les liaisons déformables (16).

16. Procédé selon l'une quelconque des revendications précédentes, **caractérisé par le fait que** les secteurs comportent chacun au moins une dent et **par le fait que** l'on engage périodiquement, au cours de l'enroulement de la bande de secteurs sur le mandrin, au moins un linguet (500) dans des encoches des secteurs, de manière à aligner les dents qui se superposent dans une direction parallèle à l'axe d'enroulement, ledit linguet étant apte à se déplacer entre une position saillante dans laquelle il peut coopérer avec la bande de secteurs et une position rétractée dans laquelle il ne gêne pas la mise en place des secteurs sur le mandrin.

17. Procédé selon la revendication 16, **caractérisé par le fait que** ledit au moins un linguet est solidaire d'au moins un galet apte à se déplacer dans au moins un chemin de came (530) ayant une forme commandant le déplacement du linguet entre lesdites positions saillante et rétractée en fonction de la rotation du mandrin.

18. Procédé selon la revendication précédente, **caractérisé par le fait que** le chemin de came est configuré de telle sorte que tous les linguets passent de la position saillante à la position rétractée ou réciproquement pour une rotation du mandrin de 1/2n tour et **par le fait que** le nombre de linguets est égal à n, étant notamment égal à 8.

19. Procédé selon l'une des revendication 17 ou 18, **caractérisé par le fait que** la forme de chaque chemin de came permet de disposer tous les linguets dans la même position, saillante ou rétractée, pour une position angulaire prédéterminée du mandrin.

20. Procédé selon la revendication 19, **caractérisé par le fait qu'**il comprend encore les étapes suivantes :

   - placer tous les linguets en position saillante,
   - presser axialement la portion de bande enroulée autour du mandrin au moyen d'un plateau presseur.

21. Procédé selon l'une quelconque des revendications précédentes, **caractérisé par le fait qu'**on soude à un poste de soudage au moins une barre (28), disposée parallèlement à l'axe d'enroulement, sur l'enroulement en place sur le mandrin.

22. Procédé selon la revendication 21, **caractérisé par**

**le fait que** la longueur de la barre est au moins égale à la longueur de l'empilage, notamment comprise entre 300 et 700 mm.

23. Procédé selon l'une quelconque des revendications 21 ou 22, **caractérisé par le fait que** ladite barre est constitué par un profilé en forme de U et comporte deux ailes (19) qui viennent se positionner de part et d'autre d'une ou plusieurs rangées alignées de liaisons déformables reliant les secteurs.

24. Procédé selon l'une quelconque des revendications 21 à 23, **caractérisé par le fait que** le poste de soudage est indépendant du poste d'enroulement.

25. Procédé selon l'une quelconque des revendications précédentes, **caractérisé par le fait qu'**on transfère le mandrin entre un poste d'enroulement et un poste de soudage au moyen d'un bras rotatif.

26. Procédé selon l'une quelconque des revendications 19 à 25, **caractérisé par le fait qu'**il comporte en outre les étapes suivantes :

    - placer tous les linguets en position rétractée dans le mandrin,
    - extraire l'enroulement du mandrin.

27. Machine de fabrication d'un circuit magnétique de machine électrique, pour la mise en oeuvre du procédé selon l'une quelconque des revendications 1 à 26, **caractérisée par le fait qu'**elle comporte un mandrin sur lequel peut être enroulée une bande de secteurs, ce mandrin comprenant au moins un linguet, apte à se déplacer au cours de l'enroulement de la bande de secteurs, entre une position saillante dans laquelle chaque linguet peut coopérer avec la bande de secteurs et une position au moins partiellement rétractée dans laquelle il ne gêne pas la mise en place des secteurs sur le mandrin.

28. Machine selon la revendication précédente, **caractérisée par le fait que** le mandrin tourne autour d'un noyau fixe, ce noyau comportant au moins un chemin de came, et **par le fait que** les linguets sont solidaires chacun d'au moins un organe engagé dans ce chemin de sorte qu'ils soient aptes à se déplacer entre lesdites positions saillante et rétractée en fonction de la rotation du mandrin.

29. Machine selon l'une des revendications 27 ou 28, **caractérisée par le fait qu'**elle comporte un nombre de linguets (500) au moins égal au nombre de secteurs par tour, notamment huit linguets.

30. Machine selon l'une quelconque des revendications 27 à 29, **caractérisée par le fait que** le diamètre extérieur du mandrin est compris entre 200 et 400 mm, et notamment supérieur ou égal à 300 mm environ.

31. Machine selon l'une quelconque des revendications 27 à 30, **caractérisé par le fait que** le mandrin est monté sur un dispositif élévateur, notamment un dispositif motorisé ou à vérin(s) de sorte qu'il soit apte à être déplacé axialement de manière à maintenir la face supérieure de l'enroulement sensiblement à la même hauteur pendant toute la durée de l'empilage des secteurs.

32. Machine selon l'une quelconque des revendications 27 à 31, **caractérisée par le fait que** le mandrin est interchangeable.

33. Machine selon l'une quelconque des revendications 27 à 32, **caractérisée par le fait qu'**elle comporte un convoyeur configuré pour permettre d'alimenter le mandrin avec bande de secteurs issue d'un poste de découpe tout en permettant à la bande de se déformer de manière à compenser une différence de vitesse entre la vitesse de la bande à la sortie du poste de découpe et celle à l'entrée du poste d'enroulement.

34. Machine selon la revendication précédente, **caractérisée par le fait que** ledit convoyeur comporte deux parois (340 ; 350) comportant au moins une portion curviligne entre lesquelles la bande est apte à défiler.

35. Machine selon la revendication 34, **caractérisée par le fait que** les deux parois du convoyeur ont un écartement qui augmente puis diminue, lorsqu'on va du poste de découpe au poste d'enroulement.

36. Machine selon l'une quelconque des revendications 33 à 35, **caractérisée par le fait que** le convoyeur comporte des rouleaux (320) aptes à être entraînés en rotation et s'étendant au-delà d'au moins une des parois, afin de coopérer avec un mécanisme d'entraînement (335).

37. Machine selon l'une quelconque des revendications 27 à 36, **caractérisée par le fait qu'**elle comporte un galet cranté (210) monté sur un bras escamotable et apte à être entraîné en rotation lors de l'enroulement de la bande en raison de l'engagement des liaisons déformables reliant les secteurs entre les crans.

**Claims**

1. A method of manufacturing a magnetic circuit for an electrical machine, the method comprising:

- to cut out at a cutting station (112) at least one strip (12) of sectors (20) that are interconnected by deformable connections (16); and
- to wind the strip of sectors around a mandrel (201); at a winding station (200),

wherein, between the cutting station and the winding station, there is a zone (300) configured to enable the strip to deform so as to compensate for a difference in speed between a speed of the strip at an outlet from the cutting station and its speed at an inlet to the winding station.

2. A method according to the preceding claim, wherein at least a portion of the strip of sectors is maintained under tension in said zone (300) by means of at least one tensioning element (320).

3. A method according to claim 2, wherein said zone has a plurality of rollers (320) rotated other than by a travel of the strip.

4. A method according to the preceding claim, wherein said rollers turn about axes at increasing angles of inclination relative to a reference axis (Y) substantially perpendicular to the direction of advance of the strip at the outlet from the cutting station.

5. A method according to any one of the preceding claims, wherein said zone is configured in such a manner that a path of the strip of sectors in said zone is substantially horizontal.

6. A method according to any one of the preceding claims, wherein said zone (300) is configured in such a manner that the strip of sectors follows a curvilinear path therein.

7. A method according to any one of the preceding claims, wherein a position of the strip in the zone is detected, and at least a speed of the strip at the outlet from the cutting station and/or at the inlet to the winding station is modified as a function of the detected position.

8. A method according to the preceding claim, wherein a possible presence of the strip is detected at at least two points in said zone, and wherein the speed of the strip at the inlet to the winding station and/or at the outlet from the cutting station is modified in such a manner as to cause the strip to travel between said points.

9. A method according to the preceding claim, wherein the mandrel (201) is rotated in order to enable the strip to be wound thereabout.

10. A method according to any one of the preceding claims, wherein the mandrel is moved vertically as a stack is built up.

11. A method according to any one of the preceding claims, wherein the sectors are cut out by means of a press operating at a rate of more than 100 strokes per minute, and in particular at a rate of more than 150 strokes per minute.

12. A method according to the preceding claim, wherein said press exerts a thrust of less than 500 tonnes, and in particular of about 125 tonnes.

13. A method according to any one of the preceding claims, wherein the sectors are cut out while using a lubricant, and that the lubricant is removed by drying prior to the strip reaching said zone.

14. A method according to any preceding claim, wherein the sectors are pressed by means of wheels (220) against a portion of strip that has already been wound on the mandrel.

15. A method according to any preceding claim, wherein the sectors are cut out in such a manner that the deformable connections interconnecting the sectors are situated at the outer periphery of the winding and wherein the sectors are pressed radially against the mandrel by means of a toothed wheel (210) whose teeth (211) are configured in such a manner as to be capable of engaging on the deformable connections (16).

16. A method according to any preceding claim, wherein each sector has at least one tooth and wherein, during winding of the strip of sectors on the mandrel, at least one pawl (500) is periodically engaged in slots of the sectors so as to align the teeth which are superposed in a direction parallel to a winding axis, said pawl being suitable for moving between a projecting position in which it is capable of cooperating with the strip of sectors and a retracted position in which it does not impede the placing of sectors on the mandrel.

17. A method according to claim 16, wherein said at least one pawl is secured to at least one wheel suitable for traveling in at least one camming path (530) of a shape that controls the displacement of the pawl between said projecting and retracted positions as a function of the rotation of the mandrel.

18. A method according to the preceding claim, wherein the camming path is configured in such a manner that all of the pawls pass from the projecting position to the retracted position or vice versa when the mandrel turns through 1/2n of a turn, and wherein the number of pawls is equal to $\underline{n}$, and in particular is equal to 8.

19. A method according to any one of claim 17 or claim 18, wherein a shape of each camming path enables all of the pawls to be disposed in the same projecting or retracted position for a predetermined angular position of the mandrel.

20. A method according to claim 19, further comprising the following steps:

- placing all of the pawls in the projecting position; and
- pressing a portion of strip that is wound around the mandrel in an axial direction by means of a presser plate.

21. A method according to any preceding claim, wherein at least one bar (28) extending parallel to a winding axis is welded to the winding in place on the mandrel in a welding station.

22. A method according to claim 21, wherein a length of the bar is not less than a length of the stack, and in particular lies in the range 300 mm to 700 mm.

23. A method according to claim 21 or claim 22, wherein said bar is constituted by a channel-section member having two flanges (19) which are positioned on opposite sides of one or more aligned rows of deformable connections interconnecting sectors.

24. A method according to any one of claims 21 to 23, wherein the welding station is independent of the winding station.

25. A method according to any preceding claim, wherein the mandrel is transferred between a winding station and a welding station by means of a rotary arm.

26. A method according to any one of claims 19 to 25, further comprising the following steps:

- placing all of the pawls in the retracted position within the mandrel; and
- extracting the winding from the mandrel.

27. A machine for manufacturing a magnetic circuit for an electrical machine for implementing the method according to any one of claims 1 to 26, the machine comprising a mandrel on which a strip of sectors can be wound, said mandrel having at least one pawl suitable, while the strip of sectors is being wound, for moving between a projecting position in which each pawl can co-operate with the strip of sectors and a position in which it is at least partially retracted and in which it does not impede the positioning of sectors on the mandrel.

28. A machine according to the preceding claim, wherein the mandrel turns about a stationary core, said core having at least one camming path, and wherein each pawl is secured to at least one member engaged in said path so that the pawls are suitable for moving between said projecting and retracted positions as a function of the rotation of the mandrel.

29. A machine according to any one of claim 27 or claim 28, having a number of pawls (500) that is not less than the number of sectors per turn, and in particular eight pawls.

30. A machine according to any one of claims 27 to 29, wherein an outside diameter of the mandrel lies in the range 200 mm to 400 mm, and in particular is greater than or equal to about 300 mm.

31. A machine according to any one of claims 27 to 30, wherein the mandrel is mounted on an elevator device, in particular a motor-driven or actuator device so that it is suitable for being moved axially in such a manner as to maintain the top face of the winding at substantially a same height throughout the entire duration of sector stacking.

32. A machine according to any one of claims 27 to 31, wherein the mandrel is interchangeable.

33. A machine according to any one of claims 27 to 32, including a conveyor configured to feed the mandrel with a strip of sectors coming from a cutting station while also allowing the strip to deform so as to compensate for a difference in speed between a speed of the strip at an outlet from the cutting station and its speed at an inlet to the winding station.

34. A machine according to the preceding claim, wherein said conveyor has two walls (340;350) each having at least one curvilinear portion between which the strip can travel.

35. A machine according to claim 34, wherein said two walls of the conveyor are spaced apart by a distance which increases and then decreases on going from the cutting station to the winding station.

36. A machine according to any one of claims 33 to 35, wherein the conveyor has rollers (320) suitable for being rotated and extending beyond at least one of the walls in order to co-operate with a drive mechanism (335).

37. A machine according to any one of claims 27 to 36, including a toothed wheel (210) mounted on a retractable arm and suitable for being rotated during winding of the strip because of the deformable connections interconnecting the sectors engaging between the teeth of the wheel.

**Patentansprüche**

1. Verfahren zur Herstellung eines magnetischen Kreises einer elektrischen Maschine, bei dem:

   man durch Zuschneiden an einer Zuschneidestation (112) mindestens ein Band (12) von Sektoren (20) bildet, die miteinander durch verformbare Verbindungen (16) verbunden sind, und man das Band von Sektoren an einer Wickelstation (200) um eine Spindel (201) wickelt, wobei das Verfahren **dadurch gekennzeichnet ist, daß** man zwischen der Zuschneide- und der Wickelstation eine Zone (300) anordnet, die dazu eingerichtet ist, das Verformen des Bandes auf eine Weise zu ermöglichen, daß eine Geschwindigkeitsdifferenz zwischen der Geschwindigkeit des Bandes beim Austritt aus der Zuschneidestation und der bei Eintritt in die Wikkelstation kompensiert wird.

2. Verfahren nach dem vorhergehenden Anspruch, **gekennzeichnet dadurch, daß** man mindestens einen Abschnitt des Bandes von Sektoren in der Zone (300) mittels mindestens einem Spannungselement (320) in Spannung hält.

3. Verfahren nach Anspruch 2, **gekennzeichnet dadurch, daß** die Zone mehrere Rollen (320) aufweist, die anders als durch das Vorbeirollen des Bandes in Rotation gehalten werden.

4. Verfahren nach dem vorhergehenden Anspruch, **gekennzeichnet dadurch, daß** sich die Rollen um Achsen mit zunehmender Neigung bezüglich einer Referenzachse (Y) drehen, die im wesentlichen senkrecht zur Fortbewegungsrichtung des Bandes am Ausgang der Zuschneidestation liegt.

5. Verfahren nach einem der vorhergehenden Ansprüche, **gekennzeichnet dadurch, daß** die Zone (300) so eingerichtet ist,
daß in ihr der Weg des Bandes von Sektoren im wesentlichen waagerecht verläuft.

6. Verfahren nach einem der vorhergehenden Ansprüche, **gekennzeichnet dadurch, daß** die Zone (300) so eingerichtet ist, daß in ihr das Band von Sektoren einen krummlinigen Weg zurücklegt.

7. Verfahren nach einem der vorhergehenden Ansprüche, **gekennzeichnet dadurch, daß** man die Position des Bandes in der Zone detektiert und zumindest die Geschwindigkeit des Bandes beim Austritt aus der Zuschneidestation und/oder beim Eintritt in die Wickelstation in Abhängigkeit von der detektierten Position verändert.

8. Verfahren nach dem vorhergehenden Anspruch, **gekennzeichnet dadurch, daß** man gegebenenfalls das Vorhandensein des Bandes an zwei Punkten zumindest der Zone detektiert und daß man die Geschwindigkeit des Bandes beim Eintritt in die Wikkelstation und/oder beim Austritt aus der Zuschneidestation so verändert, daß das Band zwischen diesen Punkten vorbeizieht.

9. Verfahren nach dem vorhergehenden Anspruch, **gekennzeichnet dadurch, daß** man die Spindel (201) **dadurch** in Rotation hält, daß man das Band um sie herum rollen läßt.

10. Verfahren nach einem der vorhergehenden Ansprüche, **gekennzeichnet dadurch, daß** man die Spindel je nach Aufhäufung vertikal versetzt.

11. Verfahren nach einem der vorhergehenden Ansprüche, **gekennzeichnet dadurch, daß** man die Sektoren mittels einer Presse zuschneidet, die mit einem Takt von über 100 Schnitten pro Minute, insbesondere von über 150 Schnitten pro Minute betrieben wird.

12. Verfahren nach dem vorhergehenden Anspruch, **gekennzeichnet dadurch, daß** die Presse eine Schubwirkung von weniger als 500 Tonnen, insbesondere von ungefähr 125 Tonnen, ausübt.

13. Verfahren nach einem der vorhergehenden Ansprüche, **gekennzeichnet dadurch, daß** man die Sektoren unter Verwendung eines Schmiermittels zuschneidet und daß man dieses durch Trocknen entfernt, bevor das Band in der Zone eintrifft.

14. Verfahren nach einem der vorhergehenden Ansprüche, **gekennzeichnet dadurch, daß** man die Sektoren mittels Laufrollen (220) über einem Abschnitt des Bandes plaziert, der bereits über die Spindel gewickelt ist.

15. Verfahren nach einem der vorhergehenden Ansprüche, **gekennzeichnet dadurch, daß** man die Sektoren so zuschneidet, daß die die Sektoren verbindenden verformbaren Verbindungen am äußeren Rand der Wicklung angeordnet sind und daß man die Sektoren mittels einer Zahnradrolle (210) radial gegen die Spindel plaziert, wobei die Zähne (211) der Zahnradrolle so angeordnet sind, daß sie mit den verformbaren Verbindungen (16) in Eingriff gebracht werden können.

16. Verfahren nach einem der vorhergehenden Ansprüche, **gekennzeichnet dadurch, daß** die Sektoren jeweils mindestens einen Zahn aufweisen und daß man in periodischen Abständen, während des Wickelns des Bandes von Sektoren um die Spindel, mindestens eine Sperre (500) in Eingriff mit Kerben in den Sektoren bringt, um so die Zähne, die sich in einer Richtung parallel zur Wicklungsachse überlagern, in einer Linie auszurichten, wobei die Sperre dazu in der Lage ist, zwischen einer hervorragenden Position, in der sie mit dem Band von Sektoren zusammenwirken kann, und einer zurückgezogenen Position, in der sie das Platzieren der Sektoren über die Spindel nicht verhindern kann, versetzt zu werden.

17. Verfahren nach Anspruch 16, **kennzeichnet dadurch, daß** mindestens eine Sperre einstückig mit mindestens einer Laufrolle vorgesehen ist, die dazu in der Lage ist, innerhalb mindestens eines Nockenwegs (530) versetzt zu werden, der eine Form hat, die das Versetzen der Sperre zwischen der herausragenden und der zurückgezogenen Position in Abhängigkeit von der Rotation der Spindel bestimmt.

18. Verfahren nach dem vorhergehenden Anspruch, **gekennzeichnet dadurch, daß** der Nockenweg so eingerichtet ist, daß die Sperren von der herausragenden Position zur zurückgezogenen Position oder umgekehrt durch eine Rotation der Spindel um 1/2n Umdrehungen laufen, und **dadurch**, daß die Anzahl der Sperren gleich n, insbesondere gleich 8, ist.

19. Verfahren nach einem der Ansprüche 17 und 18, **gekennzeichnet dadurch, daß** es die Form jedes Nockenwegs zuläßt, daß alle Sperren bei einer vorgegebenen Winkelposition der Spindel in der gleichen Position, herausragend oder zurückgezogen, angeordnet sind.

20. Verfahren nach Anspruch 19, **gekennzeichnet dadurch, daß** es ferner die folgenden Schritte umfaßt:

> Plazieren aller Sperren in der herausragenden Position,
> Drücken des Abschnitts des um die Spindel gewickelten Bandes in axialer Richtung mittels einer Preßplatte.

21. Verfahren nach einem der vorhergehenden Ansprüche, **gekennzeichnet dadurch, daß** man beim Wickeln über die Spindel mindestens eine Stange (28), parallel zur Wicklungsachse angeordnet, an einen Schweißpunkt schweißt.

22. Verfahren nach Anspruch 21, **gekennzeichnet dadurch, daß** die Länge der Stange mindestens gleich der Länge der Aufhäufung, insbesondere zwischen 300 und 700 mm ist.

23. Verfahren nach einem der Ansprüche 21 und 22, **gekennzeichnet dadurch, daß** die Stange durch ein Profil in U-Form gebildet ist und zwei Flügel (19) aufweist, die auf beiden Seiten einer oder mehrerer in einer Linie ausgerichteter Reihen von die Sektoren verbindenden verformbaren Verbindungen angeordnet sind.

24. Verfahren nach einem der Ansprüche 21 bis 23, **gekennzeichnet dadurch, daß** der Schweißpunkt unabhängig von der Wicklungsstation ist.

25. Verfahren nach einem der vorhergehenden Ansprüche, **gekennzeichnet dadurch, daß** man die Spindel mittels eines Dreharms zwischen einer Wicklungsstation und einem Schweißpunkt bewegt.

26. Verfahren nach einem der Ansprüche 19 bis 25, **gekennzeichnet dadurch, daß** es darüber hinaus die folgenden Schritte umfaßt:

> Plazieren aller Sperren in der zurückgezogenen Position in der Spindel,
> Abziehen der Wicklung der Spindel.

27. Maschine zur Herstellung eines magnetischen Kreises einer elektrischen Maschine zur Durchführung eines Verfahrens nach einem der Ansprüche 1 bis 26, **gekennzeichnet dadurch, daß** sie eine Spindel aufweist, über die ein Band von Sektoren gewickelt werden kann, wobei die Spindel mindestens eine Sperre aufweist, die im Laufe des Wickelns des Bandes von Sektoren zwischen einer herausragenden Position, in der jede Sperre mit dem Band von Sektoren zusammenwirken kann, und einer mindestens teilweise zurückgezogenen Position, in der sie die Anordnung der Sektoren auf der Spindel nicht verhindern kann, versetzt werden kann.

28. Maschine nach dem vorhergehenden Anspruch, **gekennzeichnet dadurch, daß** sich die Spindel um einen festen Kern dreht, wobei der Kern mindestens einen Nockenweg umfaßt, und **dadurch**, daß die Sperren jeweils mit mindestens einem Element einstückig vorgesehen sind, das sich so in Eingriff mit dem Weg befindet, daß sie dazu in der Lage sind, in Abhängigkeit von der Rotation der Spindel zwischen der herausragenden und der zurückgezogenen Position versetzt zu werden.

29. Maschine nach einem der Ansprüche 27 und 28, **gekennzeichnet dadurch, daß** sie eine Anzahl von Sperren (500) aufweist, die mindestens gleich der Anzahl von Sektoren pro Umdrehung ist, insbesondere acht Sperren.

30. Maschine nach einem der Ansprüche 27 bis 29, **ge-**

**kennzeichnet dadurch, daß** der Außendurchmesser der Spindel zwischen 200 und 400 mm, insbesondere größer oder gleich ungefähr 300 mm, ist.

31. Maschine nach einem der Ansprüche 27 bis 30, **gekennzeichnet dadurch, daß** die Spindel auf einer Hebeeinrichtung angebracht ist, insbesondere einer Einrichtung mit Motor oder mit Schraubenspindel(n), so daß sie axial so versetzt werden kann, daß die obere Fläche der Wicklung im wesentlichen in der gleichen Höhe während der gesamten Dauer des Aufhäufens von Sektoren gehalten werden kann.

32. Maschine nach einem der Ansprüche 27 bis 31, **gekennzeichnet dadurch, daß** die Spindel austauschbar ist.

33. Maschine nach einem der Ansprüche 27 bis 32, **gekennzeichnet dadurch, daß** sie eine Fördereinrichtung umfaßt, die dazu eingerichtet ist, die Versorgung der Spindel mit einem Band von Sektoren, das von einer Zuschneidestation ausgegeben wird, zu ermöglichen, während das Verformen des Bandes auf solch eine Weise zugelassen wird, daß eine Geschwindigkeitsdifferenz zwischen der Geschwindigkeit des Bandes beim Austritt aus der Zuschneidestation und der beim Eintritt in die Wickelstation kompensiert wird.

34. Maschine nach dem vorhergehenden Anspruch, **gekennzeichnet dadurch, daß** die Fördereinrichtung zwei mindestens einen krummlinigen Abschnitt aufweisende Wände (340; 350) aufweist, zwischen denen das Band vorbei laufen kann.

35. Maschine nach Anspruch 34, **gekennzeichnet dadurch, daß** die zwei Wände der Fördereinrichtung einen Abstand haben, der zunächst zunimmt, dann abnimmt, wenn man sie von der Zuschneidestation zur Wicklungsstation hin betrachtet.

36. Maschine nach einem der Ansprüche 33 bis 35, **gekennzeichnet dadurch, daß** die Fördereinrichtung Rollen (320) aufweist, die in Rotation betrieben werden können und über mindestens eine der Wände hinaus verlaufen, um mit einem Antriebsmechanismus (335) zusammenzuwirken.

37. Maschine nach einem der Ansprüche 27 bis 36, **gekennzeichnet dadurch, daß** sie eine Zahnradrolle (210) aufweist, die auf einem einfahrbaren Arm angebracht ist und während des Wickelns des Bandes aufgrund des Eingriffs der die Sektoren verbindenden verformbaren Verbindungen und der Zähne in Rotation betrieben werden kann.

FIG_1

FIG_2

FIG.3

FIG_4

FIG_5

FIG.6

FIG.7

**EP 1 335 480 B1**

**RÉFÉRENCES CITÉES DANS LA DESCRIPTION**

**Documents brevets cités dans la description**

- EP 1120882 A2